# EUROPÄISCHE PATENTANMELDUNG

(11) **EP 1 464 427 A2**
(43) Veröffentlichungstag der Anmeldung: **06.10.2004**
(21) Anmeldenummer: 04002981.1
(22) Anmeldetag: 11.02.2004
(51) Int. Cl.: B23B 45/00

(54) **Schaltbares Getriebe einer handgeführten Werkzeugmaschine**

(30) Priorität: 03.04.2003 DE 10315138
(71) Anmelder: Atlas Copco Electric Tools GmbH, 71364 Winnenden (DE)
(72) Erfinder: Eisenhardt, Armin, 72379 Hechingen (DE)
(74) Vertreter: Wasmuth, Rolf, Dipl.-Ing.

(57) **Zusammenfassung**

Die Erfindung betrifft ein schaltbares Getriebe (1) einer handgeführten Werkzeugmaschine (2), insbesondere eines Bohrschraubers. Das schaltbare Getriebe (1) weist eine Achsrichtung (3) und eine bezogen auf die Achsrichtung (3) in axialer Richtung verschiebliche und zwischen zwei Schaltstufen (4, 5) umschaltbare Zahnradanordnung (6) auf. Es ist ein achsparallel zur Achsrichtung (3) schwenkbares Stellglied (7) und eine mit dem Stellglied (7) mitschwenkbare Schaltkulisse (8) vorgesehen. Die Schaltkulisse (8) wirkt mit der Zahnradanordnung (6) zu deren Umschaltung zusammen.

## Beschreibung

Die Erfindung betrifft ein schaltbares Getriebe einer handgeführten Werkzeugmaschine mit den Merkmalen nach dem Oberbegriff des Anspruchs 1 sowie eine handgeführte Werkzeugmaschine.

Handgeführte Werkzeugmaschinen wie Bohrmaschinen, Bohrschrauber oder dgl. weisen schaltbare Getriebe auf, die zwischen zumindest zwei Schaltstufen umschaltbar sind. Die beiden Schaltstufen können dabei ein erster und ein zweiter Gang mit unterschiedlichen Ausgangsdrehzahlen sein. Es kann auch eine Umschaltung zwischen Rechts- und Linkslauf, zwischen Bohr- und Schraubbetrieb oder dgl. vorgesehen sein. Entsprechende Werkzeugmaschinen weisen dabei ein von außen mit der Hand betätigbares Stellglied auf, mittels dessen die Umschaltung bewirkt wird.

Getriebeintern ist dabei eine axial verschiebliche Zahnradanordnung vorgesehen, die mittels des Stellgliedes zwischen zwei verschiedenen Axialpositionen verschieblich ist. Die genannte Zahnradanordnung greift dabei in unterschiedliche Gegenverzahnungen, in ein Kupplungselement, eine Arretierung oder dgl. ein.

Ein axiales Verschieben der Zahnradanordnung setzt ein exaktes Fluchten, beispielsweise mit der Verzahnung eines weiteren Zahnrades, mit einer Arretierung oder dgl. voraus. Bei nicht gegebener Fluchtung kann das Umschalten schwierig sein und setzt einiges Feingefühl der Bedienperson voraus.

Bei auftretenden Betriebslasten, insbesondere im Zusammenhang mit einer Schrägverzahnung, mit wechselnder Drehrichtung im Schraubbetrieb oder dgl. können auf die verschiebliche Zahnradanordnung unter Umständen hohe Axialkräfte wirken. Unter ungünstigen Umständen führt dies zu einem Rausspringen der Zahnradanordnung aus der gewählten Schaltstufe.

Der Erfindung liegt die Aufgabe zugrunde, ein gattungsgemäßes schaltbares Getriebe derart weiterzubilden, daß eine vereinfachte und betriebssichere Wahl der gewünschten Schaltstufe gegeben ist.

Die Aufgabe wird durch ein schaltbares Getriebe mit den Merkmalen des Anspruchs 1 gelöst.

Der Erfindung liegt des weiteren die Aufgabe zugrunde, eine handgeführte Werkzeugmaschine hinsichtlich einer verbesserten Handhabung ihres Schaltgetriebes weiterzubilden.

Die Aufgabe wird durch eine Werkzeugmaschine mit den Merkmalen des Anspruchs 18 erfüllt.

Es wird ein schaltbares Getriebe einer handgeführten Werkzeugmaschine bzw. eine entsprechend ausgebildete Werkzeugmaschine vorgeschlagen, wobei eine bezogen auf die Achsrichtung des Getriebes in axialer Richtung verschiebliche und zwischen zwei Schaltstufen umschaltbare Zahnradanordnung vorgesehen ist. Ein Stellglied ist um eine achsparallel zur Achsrichtung liegende Schwenkachse schwenkbar ausgebildet. Des weiteren ist eine mit dem Stellglied mitschwenkbare Schaltkulisse vorgesehen, wobei die Schaltkulisse mit der Zahnradanordnung zu deren Umschaltung zusammenwirkt.

Bei der gewählten Anordnung weisen das Stellglied zusammen mit der Schaltkulisse eine quer zur Verschiebungsrichtung der Zahnradanordnung liegende Betätigungsrichtung auf. In Folge einer Schwenkbewegung des Stellgliedes und der Schaltkulisse wird mittels der Schaltkulisse eine axiale Verschiebung der Zahnradanordnung erreicht. Bei entsprechender Auswahl der Geometrie der Schaltkulisse kann mit geringen Betätigungskräften am Stellglied eine hohe Axialkraft auf die Zahnradanordnung bewirkt werden. Die Schwenkbewegung hat sich als ergonomisch günstig herausgestellt. Es ist eine zuverlässige und kraftsparende Umschaltung ermöglicht.

Durch die Anordnung einer Schaltkulisse ergibt sich eine Zwangsführung der Zahnradanordnung. Es ist eine eindeutige Korrelation zwischen der Umfangsstellung der Schaltkulisse und der axialen Stellung der Zahnradanordnung gegeben. Bei entsprechender geometrischer Auslegung der Schaltkulisse sind die Rückwirkungen von axialen Kräften der Zahnradanordnung auf die Schaltkulisse bzw. auf das Stellglied gering. Die Schaltkulisse kann auch selbsthemmend ausgelegt sein, wodurch sich eine zuverlässige Verriegelung der Zahnradanordnung in einer gewählten Schaltstufe ergibt.

Die Schaltkulisse weist dabei zweckmäßig einen schräg und etwa linear verlaufenden Mittenbereich auf. Der Schrägungswinkel kann dabei auf Selbsthemmung ausgelegt sein. Es ergibt sich eine feinfühlige und präzise definierte Umschaltführung der Zahnradanordnung mit geringen oder fehlenden Rückwirkungen auf die gewählte Stellung des Stellgliedes.

In vorteilhafter Weiterbildung ist die Schaltkulisse mit mindestens einem und insbesondere zwei parallel zur Umfangsrichtung verlaufenden Endbereichen versehen. Die Endbereiche wirken dabei als zuverlässige formschlüssige Verriegelung für die Zahnradanordnung in einer oder beiden gewählten Schaltstufen. Darüber hinaus ist durch die genannten Endbereiche vermeidbar, daß bei Betätigung des Stellgliedes eine gewählte Schaltstufe versehentlich nicht vollständig eingelegt wird.

Zur weiteren Präzisierung des Schalt- und Verriegelungsvorganges ist zweckmäßig ein mit der Zahnradanordnung axial mitbeweglicher, zumindest näherungsweise spielfrei in die Schaltkulisse eingreifender Führungsstift vorgesehen. Die spielfreie Anordnung führt zu einer Verriegelung der Zahnradanordnung in genau definierten Endpositionen und ermöglicht in Zwischenbereichen eine feinfühlige axiale Verschiebung. Ein vorsichtiges Einlegen eines gewählten Ganges ist damit vereinfacht.

In vorteilhafter Weiterbildung sind dabei zwei in Umfangsrichtung versetzt zueinander angeordnete, jeweils in eine eigene Schaltkulisse eingreifende Führungsstifte vorgesehen. Es ergibt sich dadurch eine Kraftübertragung auf die Zahnradanordnung mit geringen oder fehlenden Unsymmetrien. Ein zu Schwergängigkeit führendes Verkanten der Anordnung ist vermieden.

Der Führungsstift ist zweckmäßig als Teil eines in einer Umfangsnut die Zahnradanordnung zumindest teilweise umgreifenden und in Umfangsrichtung gehäusefest festgelegten Drahtbügels ausgebildet. Der Drahtbügel ist mit geringem Materialaufwand kostengünstig zu fertigen. Seine Führung in einer Umfangsnut der Zahnradanordnung erlaubt ein freigängiges Drehen der Zahnradanordnung relativ zum Drahtbügel. In axialer Richtung ist eine zuverlässige Übertragung auch größerer Kräfte vom Drahtbügel auf die Zahnradanordnung zum Zwecke ihrer axialen Verschiebung möglich.

In vorteilhafter Weiterbildung ist für das Stellglied eine Rasteinrichtung vorgesehen. Dadurch ist vermieden, daß die schaltbare Zahnradanordnung in unerwünschten Zwischenpositionen verweilen kann. Ggf. kann die Rasteinrichtung für das Stellglied auch als Verriegelungseinrichtung für die axial verschiebliche Zahnradanordnung ausgebildet sein.

In einer zweckmäßigen Variante ist die Rasteinrichtung radial wirkend und insbesondere durch eine radial nach innen gebogene, mit einer radial nach außen hervorstehenden Erhebung zusammenwirkenden Blattfeder ausgebildet. Die Rasteinrichtung kann dabei zwischen dem Stellglied und dem Schaltglied angeordnet sein, wobei in axialer Richtung kein zusätzlicher Bauraum erforderlich ist. Es ergibt sich eine in Achsrichtung kompakte Bauweise.

In einer vorteilhaften Variante ist die Rasteinrichtung axial wirkend und insbesondere durch ein axial angeordnetes, mit einer axialen Rastvertiefung zusammenwirkenden Federelement ausgebildet. Das Federelement kann dabei insbesondere im Gehäuse der Werkzeugmaschine angeordnet sein, wobei am Stellglied lediglich eine entsprechende Anzahl von Rastvertiefungen vorzusehen ist. Die Rasteinrichtung erfordert im Bereich des Stellgliedes und des Schaltgliedes praktisch keinen eigens dafür vorgesehenen Bauraum. Die Baueinheit aus Stellglied und Schaltglied kann in axialer und radialer Richtung kompakt ausgeführt sein.

In einer vorteilhaften Ausbildung ist eine Synchronisierungseinrichtung vorgesehen, die das Stellglied und die Schaltkulisse umfaßt. Die Schaltkulisse ist dabei in einem getrennt vom Stellglied schwenkbaren Schaltglied angeordnet. Das Stellglied und das Schaltglied sind in Umfangsrichtung mittels einer Feder kraftschlüssig miteinander verbunden. Bei einer Verschwenkung des Stellgliedes wird zunächst die Feder vorgespannt, in dessen Folge eine Federkraft auf das Schaltglied in gleicher Richtung wie die Betätigungsrichtung des Stellgliedes wirkt. Die Federkraft wird mittels der Schaltkulisse in axiale Richtung umgelenkt und wirkt dadurch in axialer Richtung auf die Zahnradanordnung. Eine Verschwenkung des Schaltgliedes und damit einhergehend eine Verschiebung der Zahnradanordnung erfolgt jedoch erst dann, wenn die Zahnradanordnung mit weiteren in Angriff zu bringenden Zahnrädern, mit einer Arretierung oder dgl. auf Lücke steht. Bei einer Position auf Lücke ist eine Synchronisierung gegeben, bei der ein Schaltvorgang zuverlässig und ohne Überbeanspruchung der ineinandergreifenden Teile erfolgt. Das Stellglied kann unabhängig vom Synchronisierungszustand nach Belieben betätigt werden. Eine Umschaltung und eine Verriegelung in der gewählten Schaltposition mittels der Schaltkulisse erfolgt erst bei einem sich einstellenden synchronisierten Zustand.

Zur Steigerung der Synchronisierungsqualität ist das Schaltglied in Umfangsrichtung schwenkbar und in Achsrichtung festliegend an einem Gehäuse der Werkzeugmaschine geführt. Es ergibt sich dadurch ein präzises und zumindest näherungsweise direktes und spielfreies Zusammenwirken zwischen dem Stellglied mit seiner Schaltkulisse und der axial verschieblichen Zahnradanordnung. Das Stellglied zur Betätigung des Schaltgliedes ist zweckmäßig in Umfangsrichtung schwenkbar und in Achsrichtung festliegend am Schaltglied selbst geführt. Dadurch ist eine zumindest näherungsweise direkte und spielfreie Wirkungskette zwischen dem Stellglied, dem Schaltglied und der Zahnradanordnung erzielbar.

Bei der genannten Anordnung sind vorteilhaft zwei als vorgespannte Schraubendruckfedern ausgebildete Federn in Umfangrichtung symmetrisch zueinander angeordnet. Die symmetrische Anordnung führt zu einer gleichmäßigen Schaltbewegung in beide Schaltrichtungen. Bei entsprechender Wahl der Federvorspannung kann eine hinreichend gleichförmige Federkraft zwischen Stell- und Schaltglied über den gesamten Differenzweg zwischen beiden Gliedern erreicht werden. In der Folge ergibt sich im synchronisierten Zustand eine gleichförmige Schaltbewegung der Zahnradanordnung über ihren gesamten Schaltweg.

Bei einer zweckmäßigen alternativen Ausführung ist als Feder eine insbesondere in Umfangsrichtung des Stellgliedes mittig angeordnete Schraubenfeder vorgesehen. Insbesondere in Verbindung mit einer axial wirkenden Bauweise der Rasteinrichtung ist der erforderliche Bauraum für das Stellglied und das Schaltglied minimiert.

In einer vorteilhaften Weiterbildung ist das Getriebe als Planetengetriebe mit einem Hohlrad ausgebildet, wobei das Hohlrad axial verschieblich die Zahnradanordnung bildet. Das Hohlrad liegt bezüglich der übrigen Getriebekomponenten wie Planeten- und Sonnenräder radial außerhalb und ist für einen Schaltvorgang leicht erreichbar. Insbesondere bei einer Ausbildung, bei der das Stellglied und das Schaltglied das Hohlrad zumindest teilweise außenseitig umgreifen und achsgleich zum Hohlrad verschwenkbar ausgebildet sind, ist eine kompakte und spielfreie betätigbare Ausführung ermöglicht.

Die beiden wählbaren Schaltstufen können eine Schraub- und eine Bohrstufe sein, bei der beispielsweise in der Schraubstufe ein Drehmomentbegrenzer zuschaltbar ist. Es ist insbesondere vorgesehen, daß durch die beiden Schaltstufen Gänge unterschiedlicher Ausgangsdrehzahl gebildet sind. Beide Gänge sind mittels der vorgenannten Anordnung einfach und ergonomisch günstig einlegbar, wobei die Zahnradanordnung in beiden Gängen zuverlässig verriegelt ist. Mittels der zuvor beschriebenen Synchronisierungseinrichtung kann zeitsparend zwischen zwei Gängen selbst bei mäßigen Drehzahlen umgeschaltet werden.

Ein Ausführungsbeispiel der Erfindung ist im folgenden anhand der Zeichnung näher beschrieben. Es zeigen:
- Fig. 1: in einer Querschnittsdarstellung ein Planetengetriebe eines Bohrschraubers mit einem schwenkbaren Stellglied zur Gangwahl,
- Fig. 2: die Anordnung nach Fig. 1 in einem teilweise geführten Längsschnitt,
- Fig. 3: die Anordnung nach Fig. 2 in einer anderen gewählten Schaltstufe,
- Fig. 4: eine Detailansicht des Stellgliedes und des Schaltgliedes nach Fig. 1,
- Fig. 5: in einer Seitenansicht das Schaltglied nach Fig. 4,
- Fig. 6: Einzelheiten einer Synchronisierungseinrichtung der Anordnung nach Fig. 1,
- Fig. 7: eine Seitenansicht der Anordnung nach Fig. 6.
- Fig. 8: in einer geschnittenen Frontansicht eine alternative Ausführung des Stellgliedes mit einer in Umfangsrichtung mittig angeordneten Feder;
- Fig. 9: eine teilweise geschnittene Draufsicht der Anordnung nach Fig. 8 entsprechend der dort gezeigten Schnittführung entlang der Linie IX-IX;
- Fig. 10: in einer Längsschnittdarstellung einen Ausschnitt der Anordnung nach den Fig. 8 und 9 im Bereich der Rasteinrichtung.

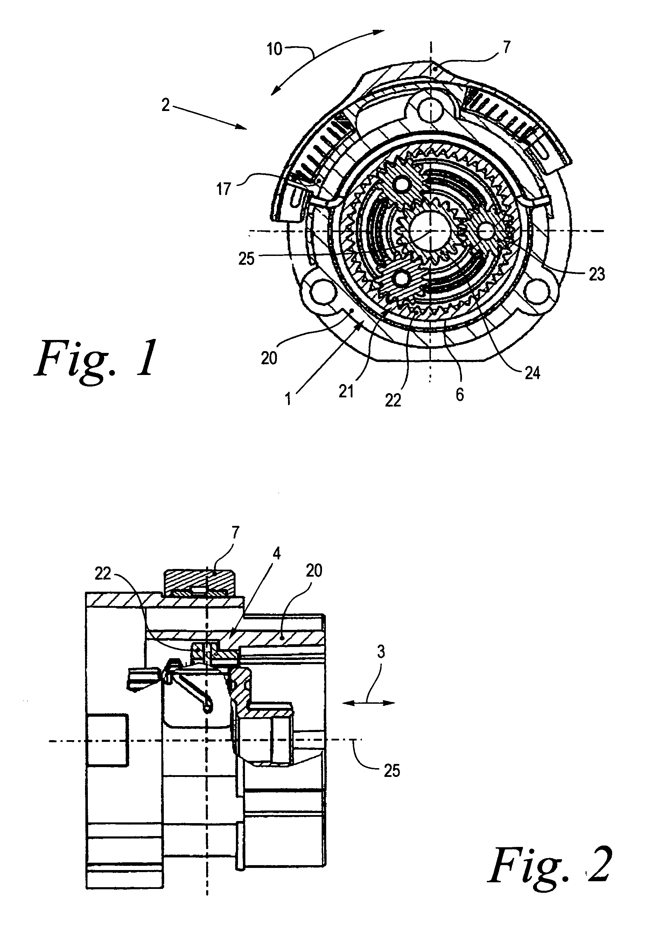

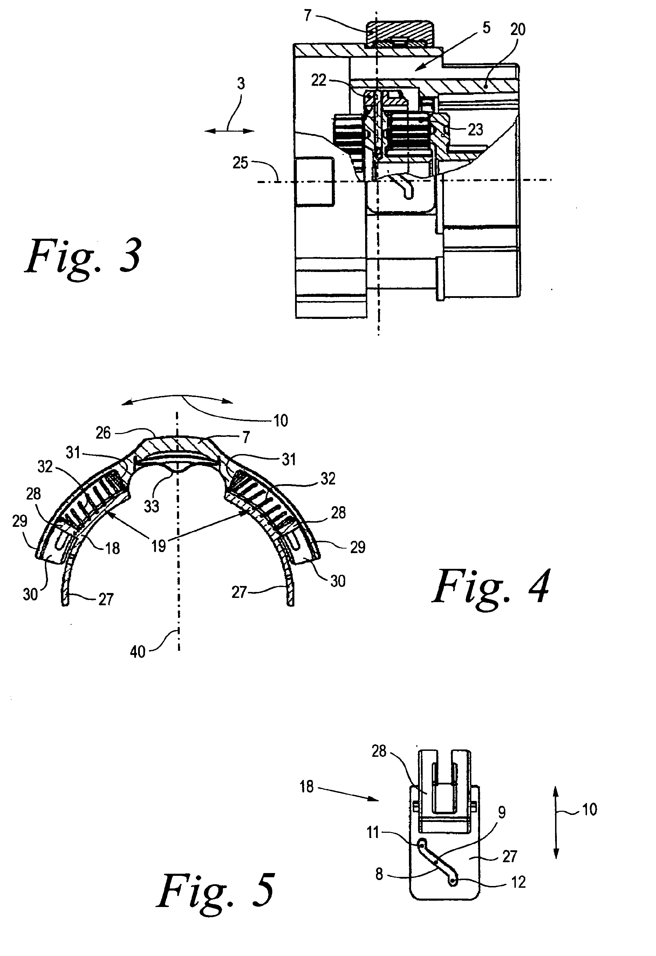

Fig. 1 zeigt in einer Querschnittsdarstellung eine Werkzeugmaschine 2 im Bereich ihres Getriebes 1. Das Getriebe 1 ist als Planetengetriebe 21 ausgebildet, welches konzentrisch zu einer Drehachse 25 ein Sonnenrad 24 und radial außerhalb dazu Planetenräder 23 aufweist. Die Planetenräder 23 sind außenseitig von einem Hohlrad 22 umgriffen. Das Hohlrad 22 bildet eine Zahnradanordnung 6, die bezogen auf die Drehachse 25 zur Umschaltung zwischen zwei Schaltstufen 4, 5 (Fig. 2, 3) axial verschieblich ist.

Zur Umschaltung zwischen den beiden Schaltstufen 4, 5 (Fig. 1, 2) ist ein Stellglied 7 und ein Schaltglied 18 vorgesehen. Das Stellglied 7 und das Schaltglied 18 umgreifen das Hohlrad 22 teilweise und sind in einer durch einen Doppelpfeil 10 angedeuteten Umfangsrichtung achsgleich zur Drehachse 25 des Hohlrades 22 verschwenkbar gelagert.

Anstelle des gezeigten Planetengetriebes kann auch ein Stirnradgetriebe oder dgl. mit einer in axialer Richtung verschieblichen Zahnradanordnung 6 vorgesehen sein.

Die im Detail nicht näher gezeigte Werkzeugmaschine 2 ist im gezeigten Ausführungsbeispiel ein handgeführter Akku-Bohrschrauber. Es kann auch eine handgeführte Bohrmaschine oder dgl. vorgesehen sein. Neben einer Stromversorgung über einen Akkumulator kommt auch eine Netzspeisung in Frage.

Fig. 2 zeigt in einer teilweise geschnittenen Seitenansicht die Anordnung nach Fig. 1. Durch einen Doppelpfeil 3 ist eine Achsrichtung der Drehachse 25 angedeutet. Das Hohlrad 22 ist in Richtung des Doppelpfeiles 3 durch Betätigung des Stellgliedes 7 verschieblich. Dabei ist das Hohlrad 22 in einer ersten Schaltstufe 4 gezeigt, in der es mit dem Gehäuse 20 drehfest verriegelt ist.

Fig. 3 zeigt die Anordnung nach Fig. 2, bei der das Hohlrad 22 in Achsrichtung 3 zu einer zweiten Schaltstufe 5 verschoben ist, in der es frei drehbar ist. Die in den Fig. 2 und 3 gezeigten Schaltstufen 4, 5 bilden damit zwei Gänge des Planetengetriebes 21 nach Fig. 1 mit unterschiedlicher Ausgangsdrehzahl. Die beiden Schaltstufen 4, 5 können auch in einer Zu- bzw. Abschaltung eines Drehmomentbegrenzers, einer Kupplung oder dgl. bestehen.

Fig. 4 zeigt eine Detailansicht der Anordnung nach Fig. 1 im Bereich des Stellgliedes 7 und des Schaltgliedes 18. Die gezeigte Anordnung ist symmetrisch zu einer Hochachse 40 aufgebaut. Das Schaltglied 18 weist zwei bogenförmige Schenkel 27 auf, von denen sich jeweils ein Federhalter 28 radial erhebt.

Das Stellglied 7 weist mittig einen in radialer Richtung erhabenen Schaltknopf 26 zur manuellen Betätigung auf. Radial innenseitig des Schaltknopfes 26 ist eine Blattfeder 33 vorgesehen. Beidseitig des Schaltknopfes 6 weist das Stellglied einen etwa U-förmigen Querschnitt auf, der durch bogenförmige Umfangswände 29 und Schenkelwände 30 gebildet ist. Die Umfangswände 29 und die Schenkelwände 30 übergreifen den Federhalter 28 mit geringem Spiel. Das Stellglied 7 ist damit in Umfangsrichtung 10 schwenkbar und in Achsrichtung 3 (Fig. 3) festliegend am Schaltglied 18 geführt.

Symmetrisch zur Hochachse 40 sind zwei Federn 19 vorgesehen, die im gezeigten Ausführungsbeispiel als Schraubendruckfedern 32 ausgebildet sind. Die Schraubendruckfedern sind unter Vorspannung zwischen den jeweiligen Federhaltern 28 und korrespondierenden Federanschlägen 31 des Stellgliedes 7 gehalten.

Fig. 5 zeigt das Schaltglied 18 nach Fig. 4 in einer Seitenansicht. Der gezeigte Schenkel 27 sowie auch der gegenüberliegende Schenkel 27 (Fig. 4) ist mit einer Schaltkulisse 8 versehen. Die Schaltkulisse 8 weist einen schräg zur Umfangsrichtung 10 verlaufenden Mittenbereich 9 sowie zwei parallel zur Umfangsrichtung 10 verlaufende Endbereiche 11, 12 auf.

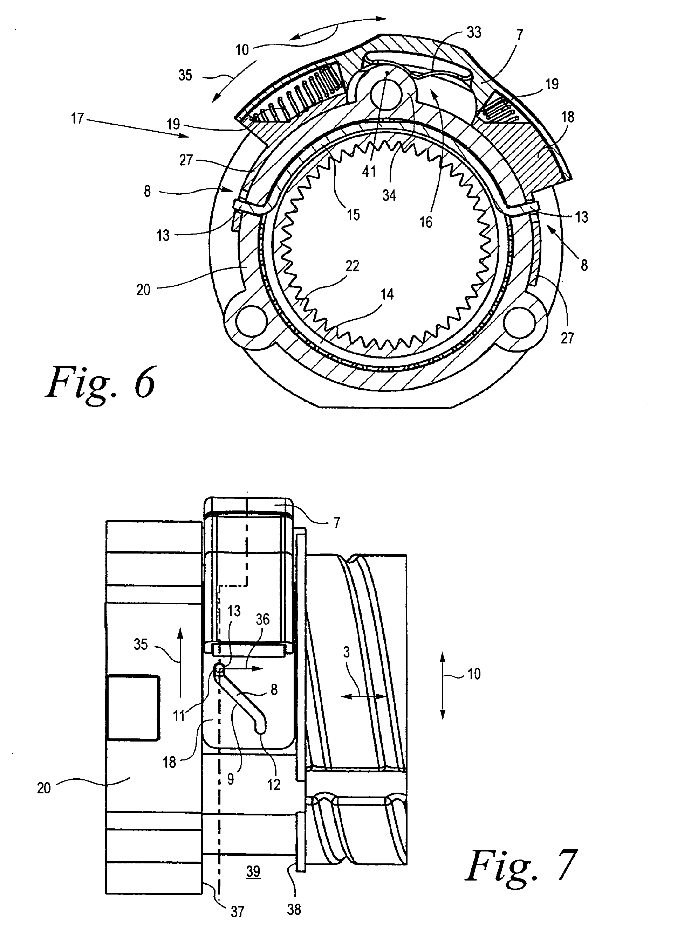

Fig. 6 zeigt ausschnittsweise die Anordnung nach Fig. 1 mit Einzelheiten des Stellgliedes 7, des Schaltgliedes 18 sowie des Hohlrades 22. Das Gehäuse 20 weist in Umfangsrichtung verteilt eine Anzahl von Schraubflanschen 34 auf. Der der Blattfeder 33 zugewandte Schraubflansch 34 bildet eine radial nach außen hervorstehende Erhebung 41. Die Blattfeder 33 des Stellgliedes 7 ist radial nach innen abgewinkelt gebogen und liegt an der Erhebung 41 elastisch federnd an. Bei einer Verschwenkung des Stellgliedes 7 in Richtung des Pfeiles 35 schnappt die gewölbte Blattfeder 33 über den Schraubflansch 34, wodurch eine Rasteinrichtung 16 für das Stellglied 7 gebildet ist.

Das Hohlrad 22 weist außenseitig eine Umfangsnut 14 auf, in der ein kreisförmig gebogener Drahtbügel 15 geführt ist. Die Enden des Drahtbügels 15 sind radial nach außen gebogen und bilden Führungsstifte 13. Die Führungsstifte 13 sind im Gehäuse 20 in Umfangsrichtung 10 gehalten und gemeinsam mit dem Hohlrad 22 axial verschieblich. Die beiden Führungsstifte 13 greifen jeweils in eine eigene Schaltkulisse 8 (Fig. 5) in den beiden Schenkeln 27 des Schaltgliedes 18 spielfrei ein.

Durch die gezeigte Anordnung ist eine Synchronisierungseinrichtung 17 gebildet, die das Stellglied 7, das Schaltglied 18 mit den Schaltkulissen 8 sowie die Federn 19 umfaßt. Das Stellglied 7 und das Schaltglied 18 sind relativ zueinander verschwenkbar, wobei das Stellglied 7 und das Schaltglied 18 in Umfangsrichtung 10 mittels der Federn 19 kraftschlüssig miteinander verbunden sind.

Fig. 7 zeigt die Anordnung nach Fig. 6 in einer Seitenansicht. Das Gehäuse 20 weist einen radialen Absatz 37 auf sowie beabstandet dazu einen umlaufenden Flansch 38. Zwischen beiden ist eine umlaufende Nut 39 gebildet, in der das Stellglied 7 zusammen mit dem Schaltglied 18 in Umfangsrichtung 10 schwenkbar und in Achsrichtung 3 festliegend geführt ist. Das Stellglied 7 ist dabei in der Schwenkposition nach 6 gezeigt, wobei die Ansicht nach Fig. 7 einer Ansicht von rechts bezogen auf die Darstellung nach Fig. 6 entspricht. Der Führungsstift 13 liegt dabei im oberen Endbereich 11 der Schaltkulisse 8. Der zusammen mit dem Hohlrad 22 (Fig. 6) in Achsrichtung 3 verschiebliche Führungsstift 13 ist dabei in dem Endbereich 11 verriegelt. Durch die Führung des Drahtbügels 15 mit den Führungsstiften 13 in der Umfangsnut 14 des Hohlrades 22 (Fig. 6) ist damit auch das Hohlrad 22 in Achsrichtung 3 verriegelt. Durch Verschwenkung des Schaltgliedes 18 mittels des Stellgliedes 7 wird der Führungsstift 13 mittels der Schaltkulisse 8 in Richtung des Pfeiles 36 bewegt. Über die Führung des Drahtbügels 15 in der Umfangsnut 14 des Hohlrades 22 (Fig. 6) wird damit auch eine axiale Verschiebung des Hohlrades 22 bis zu der aus dem zweiten Endbereich 12 der Schaltkulisse 8 sich ergebenden zweiten Schaltposition verschoben. Eine Rückschaltung in die nach Fig. 7 gezeigte erste Schaltposition erfolgt analog durch gegenläufige Verschwenkung des Schaltgliedes 18.

Die Funktionsweise der Synchronisierungseinrichtung 17 ergibt sich aus einer gemeinsamen Betrachtung der Fig. 6 und 7. Zur Umschaltung des Getriebes 1 zwischen den beiden Schaltstufen 4, 5 (Fig. 2, 3) wird zunächst das Stellglied 7 in Richtung des Pfeiles 35 verschwenkt. Aus der gezeigten Rastposition heraus schnappt dabei die Blattfeder 33 über den Schraubflansch 24 und gelangt dabei in eine zweite Rastposition. Über den Kraftschluß mittels der Feder 19 erfährt das Schaltglied 18 eine Kraft in die gleiche Schwenkrichtung 35. Diese in Umfangsrichtung 10 wirkende Kraft wird mittels der Schaltkulisse 8 und des Drahtbügels 15 in axialer Richtung auf das Hohlrad 22 übertragen. Erst bei Erreichen einer synchronisierten Stellung des Hohlrades 22, bei dem dessen Zähne auf Lücke beispielsweise mit den Zähnen der Planetenräder 23 (Fig. 1) stehen, erfolgt eine axiale Verschiebung des Hohlrades 22 zusammen mit einer Verschwenkung des Schaltgliedes 18 in Richtung des Pfeiles 35 infolge der Federkraft der Feder 19. Eine synchronisierte Stellung des Hohlrades 22 kann sich beispielsweise auch aus einer drehfesten Einrastung in das Gehäuse 20 bei der in Fig. 2 gezeigten Schaltstufe 4 ergeben.

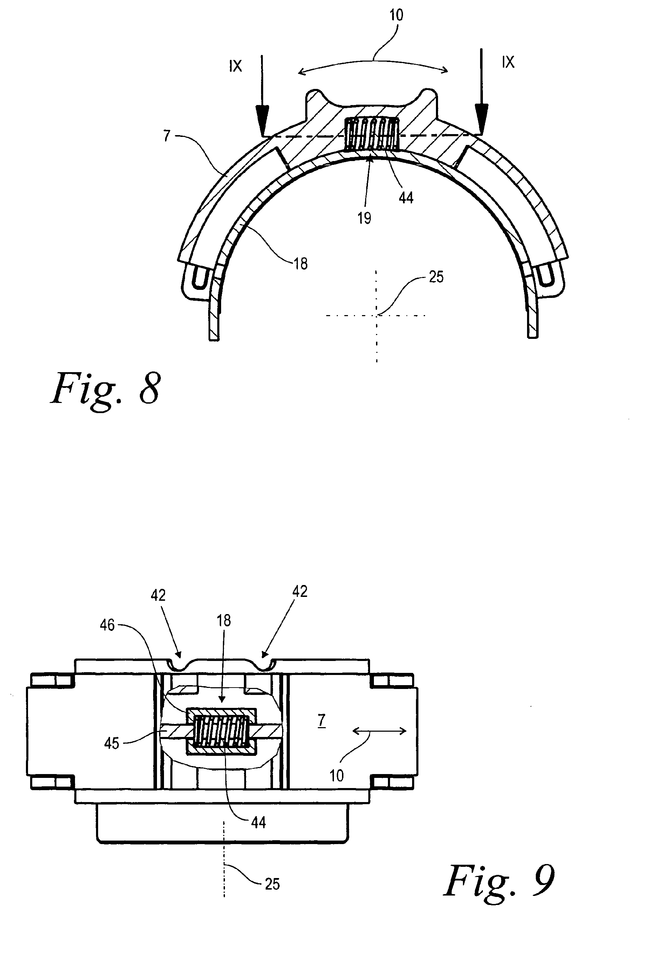

Fig. 8 zeigt in einer Querschnittsdarstellung eine alternative Ausführung des Stellgliedes 7 und des Schaltgliedes 18. Das Stellglied 7 ist gegenüber dem Schaltglied 18 bezogen auf die Drehachse 25 in Umfangsrichtung 10 relativ verschieblich, wobei das Stellglied 7 und das Schaltglied 18 in Umfangsrichtung 10 mittels der Feder 19 kraftschlüssig miteinander verbunden sind. Die Feder 19 ist dabei als Schraubenfeder 44 mit einer tangential zur Umfangsrichtung 10 liegenden Längsachse ausgebildet und bezogen auf die Umfangsrichtung 10 mittig im Stellglied 7 angeordnet.

Fig. 9 zeigt eine Draufsicht der Anordnung nach Fig. 8 in einer teilweise entlang der Linie IX-IX nach Fig. 8 geschnittenen Darstellung. Das Stellglied 7 weist eine innenseitige, in Umfangsrichtung 10 verlaufende Rippe 45 auf, in der die Schraubenfeder 44 gehalten ist. Am Schaltglied 18 ist eine die Schraubenfeder 44 umgreifende Federaufnahme 46 vorgesehen, die die Schraubenfeder 44 in Richtung der Drehachse 25 und in Umfangsrichtung 10 abstützt. Die Rippe 45 durchgreift die Federaufnahme 46 in der Umfangsrichtung 10, wodurch eine federbelastete Relativverschieblichkeit des Stellgliedes 7 gegenüber dem Schaltglied 18 in Umfangsrichtung 10 gegeben ist. Das Stellglied 7 weist auf seiner rückwärtigen Stirnseite zwei axiale Rastvertiefungen 42 auf.

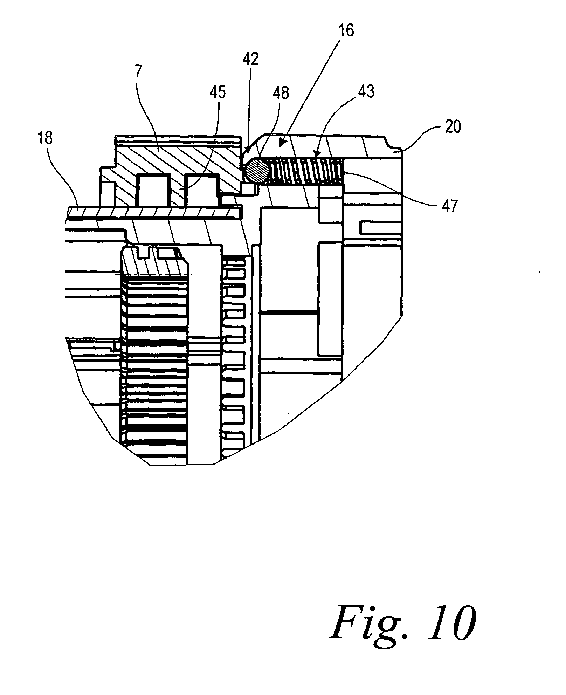

Fig. 10 zeigt eine Längsschnittdarstellung der Anordnung nach den Fig. 8 und 9 in einer ausschnittsweise vergrößerten Detailansicht. Im Gehäuse 20 ist eine axial wirkende Druckfeder 47 gehalten, wobei zwischen der Druckfeder 47 und dem Stellglied 7 eine Kugel 48 vorgesehen ist. Durch die Kraft der vorgespannten Druckfeder 47 ist die Kugel 48 in eine der beiden Rastvertiefungen 42 des Stellgliedes 7 (Fig. 9) hineingedrückt. Durch die Druckfeder 47, die Kugel 48 und die beiden Rastvertiefungen 42 ist eine axial wirkende Rasteinrichtung 16 gebildet. Beim Drehen des Stellgliedes 7 in Umfangsrichtung 10 (Fig. 9) rollt die Kugel 48 auf der rückwärtigen Stirnseite des Stellgliedes 7 im Bereich der beiden Rastvertiefungen 42 ab. Bei einer Drehstellung, in der eine der beiden Rastvertiefungen 42 in Überdeckung mit der Kugel 48 liegt, wird die Kugel 48 in die entsprechende Rastvertiefung 42 hineingedrückt, wodurch eine rastende Festlegung des Stellgliedes 7 gegeben ist. Der Ansicht nach Fig. 9 ist zu entnehmen, daß die beiden Rastvertiefungen 42 auf ihren einander zugewandten Seiten gerundet und auf ihren beiden einander abgewandten Seiten scharfkantig steil ausgebildet sind. Die gerundete Ausbildung ermöglicht ein leichtes Hinein- und Herausgleiten der Kugel 48 bei einer Bewegung des Stellgliedes 7 von einer Rastposition zur jeweils anderen. Die jeweils außenseitig liegende scharfkantige und steile Ausführung der Rastvertiefungen 42 beschränkt den Stellweg des Stellgliedes 7 auf den zwischen den beiden Rastvertiefungen 42 liegenden Bereich.

## Patentansprüche

1. Schaltbares Getriebe (1) einer handgeführten Werkzeugmaschine (2), insbesondere eines Bohrschraubers, mit einer Achsrichtung (3) und einer bezogen auf die Achsrichtung (3) in axialer Richtung verschiebliche und zwischen zwei Schaltstufen (4, 5) umschaltbare Zahnradanordnung (6),
**dadurch gekennzeichnet, daß** ein achsparallel zur Achsrichtung (3) schwenkbares Stellglied (7) und eine mit dem Stellglied (7) mitschwenkbare Schaltkulisse (8) vorgesehen ist, wobei die Schaltkulisse (8) mit der Zahnradanordnung (6) zu deren Umschaltung zusammenwirkt.

2. Getriebe nach Anspruch 1,
**dadurch gekennzeichnet, daß** die Schaltkulisse (8) einen schräg und etwa linear verlaufenden Mittenbereich (9) aufweist.

3. Getriebe nach Anspruch 1 oder 2,
**dadurch gekennzeichnet, daß** die Schaltkulisse (8) mit mindestens einem und insbesondere zwei parallel zur Umfangsrichtung (10) umlaufenden Endbereichen (11, 12) versehen ist.

4. Getriebe nach einem der Ansprüche 1 bis 3,
**dadurch gekennzeichnet, daß** ein mit der Zahnradanordnung (6) axial mitbeweglicher, zumindest näherungsweise spielfrei in die Schaltkulisse (8) eingreifender Führungsstift (13) vorgesehen ist.

5. Getriebe nach Anspruch 4,
**dadurch gekennzeichnet, daß** zwei in Umfangsrichtung (10) versetzt zueinander angeordnete, jeweils in eine eigene Schaltkulisse (8) eingreifende Führungsstifte (13) vorgesehen sind.

6. Getriebe nach Anspruch 4 oder 5,
**dadurch gekennzeichnet, daß** der Führungsstift (13) als Teil eines in einer Umfangsnut (14) die Zahnradanordnung (6) zumindest teilweise umgreifenden und in Umfangsrichtung (10) gehäusefest festgelegten Drahtbügels (15) ausgebildet ist.

7. Getriebe nach einem der Ansprüche 1 bis 6,
**dadurch gekennzeichnet, daß** eine Rasteinrichtung (16) für das Stellglied (7) vorgesehen ist.

8. Getriebe nach Anspruch 7,
**dadurch gekennzeichnet, daß** die Rasteinrichtung (16) radial wirkend und insbesondere durch eine radial nach innen gebogene, mit einer radial nach außen hervorstehenden Erhebung (41) zusammenwirkende Blattfeder (33) ausgebildet ist.

9. Getriebe nach Anspruch 7,
**dadurch gekennzeichnet, daß** die Rasteinrichtung (16) axial wirkend und insbesondere durch ein axial angeordnetes, mit einer axialen Rastvertiefung (42) zusammenwirkenden Federelement (43) ausgebildet ist.

10. Getriebe nach einem der Ansprüche 1 bis 9,
**dadurch gekennzeichnet, daß** eine Synchronisierungseinrichtung (17) vorgesehen ist, die das Stellglied (7) und die Schaltkulisse (8) umfaßt, wobei die Schaltkulisse (8) in einem relativ zum Stellglied (7) verschwenkbaren Schaltglied (18) angeordnet ist und wobei das Stellglied (7) und das Schaltglied (18) in Umfangsrichtung (10) mittels einer Feder (19) kraftschlüssig miteinander verbunden sind.

11. Getriebe nach Anspruch 10,
**dadurch gekennzeichnet, daß** das Schaltglied (18) in Umfangsrichtung (10) schwenkbar und in Achsrichtung (3) festliegend an einem Gehäuse (20) der Werkzeugmaschine (2) geführt ist.

12. Getriebe nach Anspruch 10 oder 11,
**dadurch gekennzeichnet, daß** das Stellglied (7) in Umfangsrichtung (10) schwenkbar und in Achsrichtung (3) festliegend am Schaltglied (18) geführt ist.

13. Getriebe nach einem der Ansprüche 10 bis 12,
**dadurch gekennzeichnet, daß** zwei vorgespannte Schraubendruckfedern (32) in Umfangsrichtung (10) symmetrisch zueinander angeordnet sind.

14. Getriebe nach einem der Ansprüche 10 bis 12,
**dadurch gekennzeichnet, daß** als Feder (19) eine insbesondere in Umfangsrichtung (10) des Stellgliedes (7) mittig angeordnete Schraubenfeder (44) vorgesehen ist.

15. Getriebe nach einem der Ansprüche 1 bis 14,
**dadurch gekennzeichnet, daß** das Getriebe (1) als Planetengetriebe (21) mit einem Hohlrad (22) ausgebildet ist, wobei das Hohlrad (22) die Zahnradanordnung (6) bildet.

16. Getriebe nach Anspruch 15,
**dadurch gekennzeichnet, daß** das Stellglied (7) und das Schaltglied (18) das Hohlrad (22) zumindest teilweise umgreifen und achsgleich zum Hohlrad (22) verschwenkbar sind.

17. Getriebe nach einem der Ansprüche 1 bis 16,
**dadurch gekennzeichnet, daß** durch die beiden Schaltstufen (4, 5) Gänge unterschiedlicher Ausgangsdrehzahl gebildet sind.

18. Handgeführte Werkzeugmaschine, insbesondere ein Bohrschrauber,
**gekennzeichnet durch** die Merkmale einer der Ansprüche 1 bis 17.
